# EUROPÄISCHE PATENTSCHRIFT

(11) **EP 0 666 796 B1**
(45) Veröffentlichungstag und Bekanntmachung des Hinweises auf die Patenterteilung: **05.06.1996**
(21) Anmeldenummer: 93918923.9
(22) Anmeldetag: 27.08.1993
(51) Int. Cl.: B29C 44/00, B29C 33/38, B29C 35/06

(54) **VERFAHREN ZUM HERSTELLEN VON FORMKÖRPERN AUS GESCHÄUMTEN KUNSTSTOFF UND FORM ZUR AUSÜBUNG DIESES VERFAHRENS**
METHOD OF MANUFACTURING MOULDED ARTICLES FROM CELLULAR PLASTIC, AND A MOULD FOR CARRYING OUT THE METHOD
PROCEDE POUR LA FABRICATION DE PIECES MOULEES EN PLASTIQUE EXPANSE ET MOULE POUR LA MISE EN UVRE DE CE PROCEDE

(30) Priorität: 26.10.1992 DE 4236081
(43) Veröffentlichungstag der Anmeldung: 16.08.1995
(73) Patentinhaber: PH. KURTZ EISENHAMMER GMBH & CO., D-97907 Hasloch am Main (DE)
(72) Erfinder: BEHL, Erhard, Konrad, D-97906 Faulbach (DE)
(74) Vertreter: Hufnagel, Walter, Dipl.-Ing., Dipl.-Wirtsch.-Ing.
(86) Internationale Anmeldenummer: DE9300783
(87) Internationale Veröffentlichungsnummer: WO9409973

(56) Entgegenhaltungen:
- EP-A- 0 259 597
- EP-A- 0 335 100
- GB-A- 1 416 080
- GB-A- 2 210 576
- US-A- 4 615 849
- US-A- 5 100 597
- Derwent's abstract, Nr 90-221191/29, week 9029, ABSTRACT OF JP,A2,2150335 (MITSUBISHI YUKA-BAR), 8 Juni 1990 (08.06.90)
- Derwent's abstract, Nr 75-38319W/23, week 7523, ABSTRACT OF JP,A2,49112970 (KANEGAFUCHI CHEM IND), 28 Oktober 1974 (28.10.74)

## Beschreibung

Die vorliegende Erfindung bezieht sich auf ein Verfahren zum Herstellen von Formkörpern aus geschäumtem Kunststoff und auf eine Form zur Ausübung des Verfahrens.

Ein derartiges Verfahren und eine dazu geeignete Form sind aus der EP-A-0 259 597 bekannt. Bei diesem Verfahren wird eine zweiteilige Form aus schlecht wärmeleitfähigem Material verwendet, die eine Vielzahl von Durchlässen oder Poren aufweist. Jede Formhälfte ist mit einer Kammer umgeben, an die Unterdruck angelegt oder in die Wasserdampf eingelassen werden kann. Über die Durchlässe oder Poren dringt Unterdruck bzw. Wasserdampf in den durch die beiden Formhälften gebildeten Formhohlraum. Die Herstellung eines Formkörpers aus geschäumten Kunststoff erfolgt derart, daß nach dem Schließen der Form diese evakuiert und nach Abschalten des Unterdrucks ein Kunststoffgranulat über einen Füllinjektor in die Form eingebracht wird. Hierauf wird die Form nochmals evakuiert und nach dem Abschalten des Unterdrucks wird in die Kammern gesättigter Wasserdampf mit einer Temperatur von 115° bis 120°C eingeleitet und über die Durchlässe der Formhälften in den Formhohlraum eingebracht. Der Wasserdampf kondensiert in der Form. Die dabei freigesetzte Energie bewirkt ein Expandieren der Granulatpartikel und damit ein Ausschäumen des Formkörpers und ein Zusammensintern der expandierten Granulatpartikel zu einem homogenen Formteil. Anschließend wird durch Anlegen von Unterdruck an die Kammern auch ein Unterdruck in der Form erzeugt. Dadurch wird das in der Form kondensierte Wasser verdampft und abgesaugt und durch die entstehende Verdampfungskälte der Formkörper auf Entformungstemperatur abgekühlt. Hierdurch soll ein geringer Energiebedarf beim Herstellungsprozeß erreicht werden, da ein wiederholter Zyklus von Kühlung der Form zwecks Entformung und Wiederaufheizung auf Expansionstemperatur entfällt. Es sind jedoch gasdurchlässige Spezialformen aus schlecht wärmeleitfähigem Material und diese umgebende Kammern notwendig. Die Kammern sollen dabei so ausgeführt sein, daß eine Kondensation des eingeführten Wasserdampfes dort nicht eintritt. Die Innenflächen der Formhälften können zur Erhöhung der Verschleißfestigkeit zusätzlich mit einer Metallschicht versehen sein. Dies bedingt jedoch wieder eine unerwünschte Kondensationsmöglichkeit für den eingeleiteten Wasserdampf. Bei Verwendung metallischer Formwände sollen diese aus einer Legierung mit relativ geringer Wärmeleitfähigkeit bestehen.

Aus der JP-A-49-112 970 ist es bekannt, vorgeschäumte Polyolefinpartikel mit einem Überdruck von 2 kg/cm² in eine auf 460 mm.Hg vorevakuierte Form einzubringen und unter Anwendung von Dampf auszuschäumen. Als Vorteil wird dort angegeben, daß man durch Anwendung von Überdruck beim Füllen der Form einen höheren Formfüllungsgrad und eine geringere Schrumpfung als beim Füllen einer Form ohne Überdruck erhält.

Es sind auch andere Verfahren zum Herstellen von Formkörpern aus geschäumtem Kunststoff in dem DE-Buch: "Expandierbares Polystyrol (EPS)", Reihe Kunststofftechnik, VDI-Verlag, Düsseldorf 1984, Seiten 99 bis 103 beschrieben. Dort ist ausgeführt, daß der Füllvorgang mit Granulat aus schäumbarem Polystyrol durch Vakuumfüllen durchgeführt werden kann. Hierzu wird der Formhohlraum vor dem Füllen evakuiert und anschließend das Füllventil geöffnet. Als Vorteile des Vakuumfüllens wird angegeben: Ersparnis an Fülluft, Füllen ohne Crack-Spalt mit entsprechender Materialersparnis, Verkürzung der Füllzeit und keine Luft zwischen den Perlen, die durch den Dampf ausgetrieben oder erwärmt werden muß, was eine Dampfersparnis vermuten läßt.

Als nachteilig werden eine geringe Packungsdichte der EPS-Perlen und der dadurch notwendige Verfahrensschritt "Spülen mit Dampf" vor dem Querbedampfen angegeben. Außerdem ergibt sich eine geringere Qualität als beim Druckfüllen. Deshalb wird dem Druckfüllen der Vorzug gegeben, zumal dadurch eine Vakuumpumpe mit weitaus geringerer Leistung vorgesehen werden kann. Außerdem kommt man beim Druckfüllen infolge dichterer Packung mit weniger Füllinjektoren aus.

Nach dem Druckfüllen wird vorgeschlagen, eine Vakuumspülung zum Absaugen der Luft zwischen den Perlen anstelle einer Dampfspülung durchzuführen. Beim anschließenden Querbedampfen kann dann der Dampf besser zwischen den Perlen hindurchströmen und seine Wärme an diese abgeben. Hierdurch wird eine Dampfersparnis erreicht. Anschließend wird die Bedampfung in bekannter Weise durchgeführt.

Zur Abkühlung und Stabilisierung des ausgeschäumten Materials wird die Form üblicherweise mittels Kühlwasser abgekühlt. Genannt ist auch die sogenannte Kondensationskühlung, bei der in die die Form umgebende Dampfkammer kaltes Kühlwasser eingespritzt wird und dadurch ein unterdruck von etwa 0,2 bis 0,4 bar erzeugt wird. Bei Anwendung der Kondensationskühlung werden Formkörper mit geringer Restfeuchte von etwa 4 bis 5 Gewichtsprozent erreicht.

Das Entformen und Auswerfen wird in üblicher Weise, beispielsweise mit Ausstoßern, unterstützt.

Der vorliegenden Erfindung liegt die Aufgabe zugrunde, das eingangs genannte Verfahren sowie eine hierzu geeignete Form derart zu gestalten, daß ein noch kürzerer, energiesparender Prozeßablauf möglich ist und trotzdem Formkörper mit geringer Restfeuchte erhalten werden, ohne daß teuere Formen oder Hilfseinrichtungen hierfür benötigt werden.

Gelöst wird diese Aufgabe durch die Merkmale des Anspruches 1.

Überraschenderweise wird durch die gleichzeitige Anwendung der bei der Vakuum- und Druckfülltechnik in Verbindung mit der Kondensationskühlung zur Anwendung gelangenden Verfahrensschritte eine erhebliche Energieeinsparung, insbesondere durch einen geringeren Dampfeinsatz und dem Entfallen besonderer Kühlmedien erreicht. Durch die Anwendung von Vakuum vor dem Füllvorgang und dem Füllen mittels Druckluft wird eine sehr intensive Füllung bei gleichmäßiger Fülldichte innerhalb sehr kurzer Zeit erreicht.

Durch das Einlassen des Dampfes unmittelbar in den evakuierten Formhohlraum ohne das übliche Beaufschlagen der die Form umgebenden Kammern mit diesem Dampf bleibt der Dampfzustand erhalten und es wird daher eine gleichmäßige Verteilung des Dampfes in der Form erreicht, wobei eine Kondensation des Dampfes an den schlecht wärmeleitenden Forminnenwänden bzw. an den schlecht wärmeleitenden Formwandschichten weitestgehend vermieden wird. Beim direkten Beschicken der Form mit Dampf erfolgt eine gleichmäßige Kondensation des Dampfes und daher eine intensive Energieabgabe an das während dieses Verfahrensschrittes ausschäumende Granulat. Bei der anschließenden erneuten Evakuierung der Form mit dem darin befindlichen Formkörper verdampft das Kondensat des Dampfes. Dadurch wird einerseits eine Kühlung des geschäumten Formkörpers und andererseits der Entzug von Feuchtigkeit am Formkörper bewirkt, so daß eine schnelle Stabilisierung des geschäumten Formkörpers und eine geringe Restfeuchte desselben erhalten wird. Schließlich ist durch den Ausstoß des geschäumten Formkörpers mit unterstützung von Druckluft eine schnelle und rückstandslose Entformung möglich.

Die Gesamtheit der angewendeten Verfahrensschritte bedingt daher gegenüber bekannten Schäumungsverfahren eine hohe Energieersparnis bis zu 70% und ermöglicht damit Fertigungsanlagen mit geringerer installierter Leistung bei verkürzter Zykluszeit zum Herstellen von sehr trockenen Schaumstoff-Formkörpern einzusetzen.

Gelöst wird die der Erfindung zugrundeliegende Aufgabe auch mit den Merkmalen des gegenständlichen Anspruches 12, wobei wichtig ist, daß neben den Formwerkzeugteilen für die eigentliche Form keinerlei die Form nach außen hin umgebende, zusätzliche Kammern vorgesehen sind, um einen zusätzlichen Aufwand an Dampf, für die Evakuierung sowie auch um ein besonderes Kühlmedium zu vermeiden.

Weitere vorteilhafte Einzelheiten der Erfindung sind in den Unteransprüchen angegeben und werden nachfolgend anhand des in der Zeichnung dargestellten Ausführungsbeispieles näher beschrieben. Es zeigen:

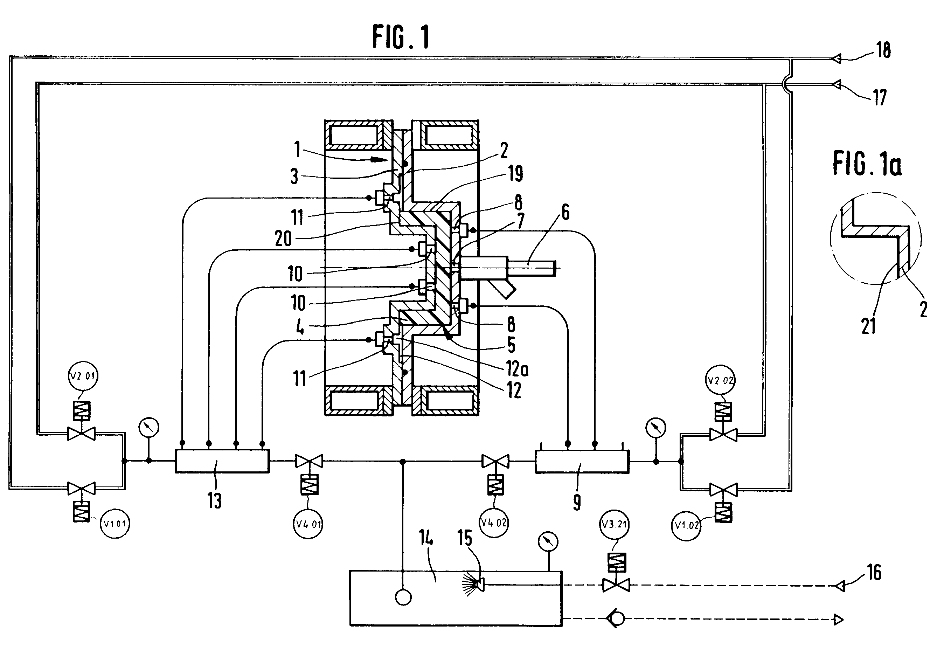

- Fig. 1: einen Steuerungsplan mit einer Form zur Ausübung des erfindungsgemäßen Verfahrens,
- Fig. 1 a: als Einzelheit einen Ausschnitt des einen von zwei Formwerkzeugteilen mit einer wärmeisolierenden Innenschicht,
- Fig. 2: eine Ansicht der mit einem Füllinjektor versehenen Außenseite der Form,
- Fig. 3: die der Außenseite der Fig. 2 gegenüberliegende Innenseite der Form und
- Fig. 4: einen vergrößerten Ausschnitt des in Fig. 1 dargestellten Werkzeugs mit den vorgesehenen Auswerfstößeln.

In Fig. 1 ist mit 1 eine aus zwei Formwerkzeugteilen 2 bzw. 3 bestehende Form bezeichnet, die im Querschnitt in geschlossenem Zustand dargestellt ist. Sie bildet einen mit einem Formkörper 4 aus geschäumtem Kunststoff, beispielsweise aus expandierbarem Polystyrol, aus expandierbaren Copolymerisaten aus Polystyrol oder Polyäthylen oder aus expandierbarem Polymethylenmethacrylat, ausgefüllten Formhohlraum 5.

Das Formwerkzeugteil 2 ist mit einem Füllinjektor 6 versehen, der in eine Füllöffnung 7 desselben mündet. Weiterhin besitzt das Formwerkzeugteil 2 Öffnungen 8, die an einen ersten Verteiler 9 angeschlossen sind. Ebenso besitzt das Formwerkzeugteil 3 Öffnungen 10 im Bereich des Formhohlraumes 5 und eine Mehrzahl von Öffnungen 11, die im Bereich außerhalb des Formhohlraums 5 vorgesehen sind und die mit den Trennstellen 12 zwischen den beiden Formwerkzeugteilen 2, 3 in Verbindung stehen.

Sofern das Volumen der Trennstellen 12 für die Bedampfung und/oder für das Evakuieren nicht ausreichend sein sollte, können zusätzliche, mit den Trennstellen 12 in Verbindung stehende Erweiterungen 12a vorgesehen sein.

Die Öffnungen 10, 11 sind an einen zweiten Verteiler 13 angeschlossen.

Die Verteiler 9 bzw. 13 sind über je ein Ventil V 4.02 bzw. V 4.01 mit einem Unterdruckbehälter 14 verbunden, der an eine Zentralvakuumeinrichtung oder an eine Vakuumpumpe angeschlossen ist. Im Unterdruckbehälter 14 ist ein Zerstäuber 15 vorgesehen, der über ein Ventil V 3.21 mit einer Wasserleitung 16 verbunden ist.

Die Verteiler 9 bzw. 13 sind außerdem über je ein Ventil V 2.02 bzw. V 2.01 mit einer Druckluftleitung 17 und über je ein Ventil V 1.02 bzw. V 1.01 mit einer Dampfleitung 18 verbunden.

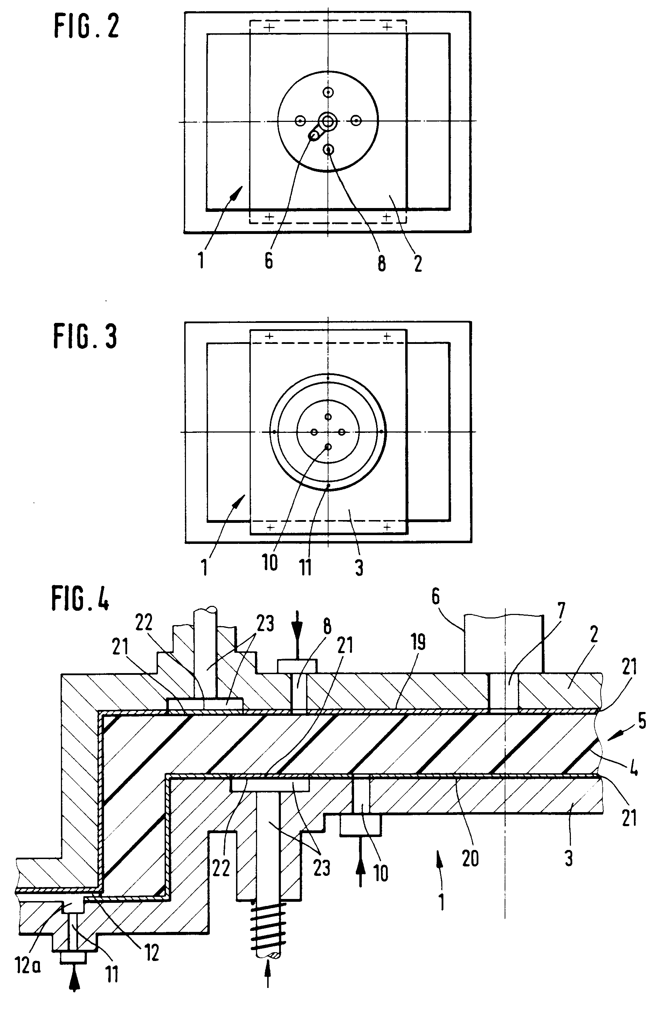

Die dem Formhohlraum 5 zugewandten Wandungen 19 bzw. 20 der Formwerkzeugteile 2, 3 sind mit einer etwa 0,3 mm bis 4 mm, insbesondere etwa 0,5 mm bis 3 mm dicken Formwandschicht 21 (siehe Fig. 1a und 4) aus schlecht wärmeleitfähigem Material versehen. Diese Formwandschicht 21 kann beispielsweise aus einer Glasur, aus Email, aus Kunststoff, insbesondere aus Polytetrafluorethylen (PTFE), Polyesterimid, Polyimid oder dgl., bestehen. Diese Formwandschicht 21 bedeckt auch die dem Formhohlraum 5 zugewandten Oberflächen 22 der Auswerfstößel 23, wie in Fig. 4 veranschaulicht ist. Die Auswerfstößel 23 können hydraulisch, pneumatisch oder mechanisch angetrieben sein. Die übrigen Teile der Formwerkzeugteile 2, 3, 23 bestehen aus Metall, beispielsweise aus Aluminium, Stahl, Stahllegierungen oder dgl.. Die Schichtdicke der Formwandschicht 21 und die Dicke des Metalls für die übrigen Teile der Form 1 werden so gewählt, daß einerseits beim Einlassen von Dampf praktisch keine Kondensation an den innenliegenden Formwandschichten 21 erfolgt und daß andererseits während des Prozeßablaufes an den Außenseiten der Formwerkzeugteile 2 bzw. 3 bei reiner Luftkühlung, also ohne besondere bzw. zusätzliche Kühlmittelanwendung, eine Oberflächentemperatur von höchstens etwa zwischen 50° bis 70°C, insbesondere von etwa 55° bis 60°C, auftritt.

Die Formwerkzeugteile 2, 3, 23 können auch aus einem entsprechend abgestimmten Kunststoff bestehen, d.h. jeweils einteilig ausgebildet sein. Beispielsweise kann ein hitzebeständiger, mit gut wärmeleitenden Partikeln und/oder Fasern, beispielsweise aus Metall, versetztes Gießharz verwendet werden, mit dem sich thermisch, d.h. hinsichtlich der Oberflächentemperatur der Formwerkzeugteile 2, 3 vergleichbare Verhältnisse einstellen, wie vorstehend beschrieben.

Gegebenenfalls können insbesondere bei Formwerkzeugteilen 2, 3 aus Kunststoff die Außenkonturen dieser Formwerkzeugteile 2, 3 so gestaltet sein, daß die als vorteilhaft angesehene Oberflächentemperatur der Form 1 von 50° bis 70°C erreicht wird. Sie können beispielsweise gerippt oder auf andere Art und Weise mit einer unregelmäßigen Oberfläche versehen sein, was durch gießtechnische Maßnahmen ohne weiteres möglich ist.

Der Verfahrensprozeß zum Herstellen eines formstabilen Formkörpers 4 aus geschäumtem Kunststoff, insbesondere aus expandierbarem Polystyrol, läuft folgendermaßen ab:
Zunächst wird die - wie dargestellt - zweiteilige oder auch mehrteilige Form 1, wie bekannt, im Eilgang und kurz vor der Schließstellung im Kriechgang geschlossen. Anschließend wird durch Öffnen der Ventile V 4.02 und V 4.01 innerhalb des Formhohlraums 5 unterdruck angelegt und dieser auf einen Wert von mindestens etwa 0,05 bis 0,1 bar eingestellt. Ebenso wird über die Öffnungen 11 von außen her ein entsprechender unterdruck an die Trennstellen 12 gelegt.

Nachdem der gewünschte unterdruck im Formhohlraum 5 erreicht ist, wird über den Füllinjektor 6 ein expandierbares Granulat mit einem Überdruck von etwa 1,0 bis 2,0 bar in den Formhohlraum 5 gefüllt. Durch den im Formhohlraum 5 vorhandenen Unterdruck und durch den Füllüberdruck wird eine sehr schnelle und gleichmäßige Füllung des Formhohlraums 5 mit weitestgehend homogener Packungsdichte erreicht.

Nach dem Schließen des Füllinjektors 6 bleiben die Ventile V 4.01 und V 4.02 für die Anlegung von unterdruck geöffnet und durch Öffnen des Ventils V 1.02 wird über die Dampfleitung 18 Dampf in den Verteiler 9 eingelassen, wobei die restliche Luft im Rohrsystem durch das Unterdruckventil V 4.02 in den Unterdruckbehälter 14 gespült wird. Danach schließt das Unterdruckventil V 4.02 und der Dampf wird in den gefüllten Formhohlraum 5 eingelassen. Es kommt zu einem Spüleffekt durch Bedampfung, wobei die Luftreste in den Zwickelvolumina des Granulats über das Rohrsystem in den Verteiler 13 und über das Unterdruckventil V 4.01 in den Unterdruckbehälter 14 gespült werden. Anschließend wird durch Öffnen des Ventils V 1.01 Dampf in den Verteiler 13 eingelassen, wobei noch möglicherweise vorhandene Luftreste im Rohrsystem durch das Unterdruckventil V 4.01 in den Unterdruckbehälter 14 gespült werden. Danach schließt auch das Unterdruckventil V 4.01 und der Dampf wird mit etwa 120 Grad Celsius und etwa 1 bar (Überdruck) zu den Öffnungen 10, 11 geführt. Dadurch wird im Formhohlraum 5 ein Dampfdruck mit einer Temperatur entsprechend der Erweichungstemperatur des Granulats aufgebaut, wobei der Dampf auf dem Granulat kondensiert und die Kondensationsenergie an das Granulat abgegeben wird. Dabei expandiert das Granulat zu einem Formkörper 4, der den Formhohlraum 5 vollständig ausfüllt und dessen Oberfläche offenporig ausgebildet ist.

Nach dem Expansionsvorgang werden die Ventile V 2.02 und V 2.01 geschlossen und die Ventile V 4.02 und V 4.01 wieder geöffnet. Dadurch entsteht im Formhohlraum 5 erneut ein Unterdruck. Dieser bewirkt, daß das Kondensat wieder in den dampfförmigen Zustand übergeht und eine Kühlung des Formkörpers 4 eintritt, da die Verdampfungswärme dem Formkörper 4 entzogen und durch den Unterdruck umgehend abgeführt wird. Dieser Zustand wird während der Stabilisierungsphase, das heißt während der Zeit, in der der Formkörper 4 seine endgültige Form annimmt, die er auch nach dem Entformen beibehält, aufrechterhalten. Hiernach werden die Ventile V 4.02 und V 4.01 geschlossen und dann die Form 1 bzw. die Formwerkzeugteile 2, 3 zunächst im Kriechgang und dann im Eilgang geöffnet und es wird dann durch Öffnen der Ventile V 2.02 und V 2.01 der Schaumstoff-Formkörper 4 bevorzugt mit Unterstützung durch Druckluft mittels der Auswerfstößel 23 ausgestoßen.

Während dieses Prozesses wird durch die gezielte Abstimmung des Formmaterials oder des Form- und Schichtmaterials 2, 3 bzw. 21 an der Außenoberfläche der Form eine Temperatur von höchstens etwa 50° bis 70° C, insbesondere von etwa 55° bis 60° C erhalten, ohne daß eine Kühlung der Form 1 durch zusätzliche Kühlmittel notwendig ist.

Um beim Kühlen des Formkörpers 4 durch Anlegen des Vakuums während der Stabilisierungsphase eine schnellere Unterdruckerzeugung zu erreichen, wird während dieser Zeit in den Unterdruckbehälter 14 durch Öffnen des Ventils V 3.21 kaltes Wasser über den Zerstäuber 15 eingesprüht. Hierdurch erfolgt erneut eine Kondensation des abgesaugten Dampfes.

Durch das vorstehend beschriebene erfindungsgemäße Verfahren erhält man bei kurzen Arbeitszyklen sehr formstabile, trockene Formkörper 4, ohne daß die Form 1 von besonderen Dampf- oder Unterdruckkammern umgeben sein muß. Vakuum und Dampf gelangen also jeweils auf kürzestem Weg äußerst energiesparend ausschließlich in den Formhohlraum 5, ohne daß zusätzliche Luftvolumina evakuiert bzw. erhitzt werden müssen.

Gemäß einer weiteren vorteilhaften Ausgestaltung der Erfindung kann die Oberfläche der Formwandschichten 21, die die Innenwandungen des Formhohlraums 5 bilden, mit in eine oder mehrere Öffnungen mündenden Nuten von etwa 0,1 mm bis 0,3 mm Breite und etwa 0,5 mm bis 1,0 mm Tiefe versehen sein. Hierdurch ist eine beschleunigte Evakuierung und Heißdampfbeschickung möglich und damit eine weitere Verkürzung des Fertigungszyklus gegeben.

Als Oberflächen bzw. Schichten aus schlecht wärmeleitfähigem Material sind Kunststoffe bzw. Kunststoffschichten mit einer geringeren Wärmeleitfähigkeit als 0,25 W/mK zu verstehen.

Bei dem vorstehend beschriebenen erfindungsgemäßen Verfahren entspricht der Formhohlraum 5 volumenmäßig dem Formkörper 4, d.h. das Luftvolumen im Formhohlraum 5 ist so gering wie möglich gehalten. Der Dampf wird direkt und auf kürzestem Wege in die zwei- oder mehrteilige Form 1 eingeleitet. Dadurch ist sichergestellt, daß die Kondensation des Dampfes an der Umgebung des Formkörpers 4 auf ein Minimum gehalten werden kann. Günstig ist, daß der Formkörper 4 aufgrund der Ausgestaltung der innenliegenden Wandungen bzw. Formwandschichten 21 der Formwerkzeugteile 2, 3 eine offenporige Oberfläche erhält, die einen schnellen Druckabbau des unter einem inneren Überdruck stehenden Formkörpers 4 während der Stabilisierungsphase von innen nach außen ermöglicht. Die als besonders vorteilhaft angesprochene Energieeinsparung bis zu 70% beruht auf der minimalen Aufheizung der zwei- bzw. mehrteiligen Form aufgrund der vorgesehenen Isoliermaßnahmen bzw. Herstellung der Form aus schlecht wärmeleitfähigem Material.

Zu dieser hohen Energieeinsparung trägt insbesondere auch bei, daß das Dampfventil V 1.02 bereits bei noch geöffneten Unterdruckventilen V 4.01 und V 4.02 geöffnet wird und zwar mit der Wirkung, die im Verteiler bzw. im Leitungssystem 9 verbliebenen Luftvolumina entsprechend auszuspülen.

Auch trägt zu dieser hohen Energieeinsparung bei, daß kurze Zeit nach dem Beginn der Bedampfung, d.h. nach etwa einer Sekunde oder nur wenig mehr, das Unterdruckventil V 4.02 geschlossen und bei weiterer Dampfzufuhr über das Dampfventil V 1.02 die erwähnte Bedampfung des Formhohlraums 5 eingeleitet und dadurch die restliche Luft aus den Zwickelvolumina des Granulats ausgespült wird.

Schließlich ist es für eine günstige Energiebilanz auch vorteilhaft, wenn das Dampfventil V 1.01 bei noch geöffnetem Unterdruckventil V 4.01 geöffnet wird, um die restliche Luft im Verteiler bzw. im Leitungssystem 13 auszuspülen.

Anstelle der anhand der Fig. 1 beschriebenen Bedampfung des Formkörpers 4 vom Formwerkzeugteil 2 zum Formwerkzeugteil 3 kann diese auch in umgekehrter Richtung vom Formwerkzeugteil 3 zum Formwerkzeugteil 2 erfolgen. Dabei werden die einzelnen Ventile in der entsprechenden Reihenfolge geschaltet.

Bei einer mehr als zweiteiligen Form 1 können an mehreren oder an allen Formwerkzeugteilen wenigstens je ein Unterdruck - und/oder Dampfanschluß vorgesehen sein.

Die Bedampfung des Formkörpers 4 erfolgt - wie üblich - mit trockenem Dampf (Sattdampf) mit etwa 120° C und etwa 1 bar Überdruck.

Mit dem erfindungsgemäßen Verfahren und dem erfindungsgemäßen Formwerkzeug hergestellte Formkörper 4 besitzen eine Restfeuchte von höchstens nur noch 3 Gewichtsprozent.

## Patentansprüche

1. Verfahren zum Herstellen eines Formkörpers aus geschäumtem Kunststoff durch Erhitzen eines durch Wärmezufuhr expandierenden Granulats in einer zwei- oder mehrteiligen Form, wobei die Form nach dem Schließen durch Anlegen von Unterdruck evakuiert, anschließend das Granulat über einen Füllinjektor in die Form eingefüllt, dann Wasserdampf solcher Temperatur und Feuchte in die vorher evakuierte Form eingebracht wird, daß das Granulat durch die infolge Kondensation des Wasserdampfes freigesetzte Energie so hoch erhitzt wird, daß die Form ausgeschäumt wird und die Partikel zu einem homogenen Formkörper zusammensintern, und daß anschließend das kondensierte Wasser bzw. der Wasserdampf durch unterdruck der Form und dem Formkörper entzogen und dabei der Formkörper auf Entformungstemperatur abgekühlt und dann aus der Form ausgestoßen wird, dadurch gekennzeichnet, daß eine Form (1) verwendet wird, deren den Formhohlraum (5) bildende Wandungen, gegebenenfalls Formwandschichten (21), gasdicht ausgebildet sind und deren dem Formhohlraum (5) zugewandten Oberflächen aus schlecht wärmeleitfähigem Material bestehen;
daß der nach dem Schließen der Form (1) an diese angelegte Unterdruck
a) an den Formhohlraum (5) und
b) außerhalb des Bereiches des Formhohlraums (5) zur Evakuierung der Trennstellen (12) zwischen den Formwerkzeugteilen ( 2, 3) angelegt wird und
c) der Unterdruck erst bei Beginn der Bedampfungsphase oder erst später während der Bedampfungsphase abgeschaltet wird.

2. Verfahren nach Anspruch 1, dadurch gekennzeichnet, daß das Dampfventil (V 1.02) bei noch geöffnetem Unterdruckventil (V 4.01) bzw. bei noch geöffneten Unterdruckventilen (V 4.01 und V 4.02) geöffnet wird.

3. Verfahren nach Anspruch 1 oder 2, dadurch gekennzeichnet, daß kurze Zeit nach dem Beginn der Bedampfung das dem entsprechenden Dampfventil (V 1.01 bzw. V 1.02) benachbarte Unterdruckventil (V 4.01 bzw. V 4.02) geschlossen wird.

4. Verfahren nach einem der Ansprüche 1 bis 3, dadurch gekennzeichnet, daß das Anlegen des Unterdrucks und die Einleitung des Dampfes unmittelbar an bzw. in die Form (1) bzw. in den Formhohlraum (5) erfolgen.

5. Verfahren nach einem der Ansprüche 1 bis 4, dadurch gekennzeichnet, daß der Unterdruck und der Dampf über dieselben Öffnungen (8, 10, 11) der Form (1) angelegt bzw. zugeführt werden.

6. Verfahren nach Anspruch 1, dadurch gekennzeichnet, daß der Unterdruck derart gewählt wird, daß die Luft im Formhohlraum (5) auf mindestens etwa 5% bis 10%, also auf etwa 0,05 bis 0,1 bar reduziert wird.

7. Verfahren nach Anspruch 1, dadurch gekennzeichnet, daß die Wärmleitfähigkeit der Wände der Form (1) bzw. der den Formhohlraum (5) bildenden Wände bzw. Formwandschichten (21) der Formwerkzeugteile (2, 3, 23) derart gewählt und/oder die Außenoberfläche derselben derart ausgebildet wird, daß die Außentemperatur der Form (1) keinen höheren Wert als etwa 50° bis 70° C, insbesondere keinen höheren Wert als etwa 55° bis 60° C, annimmt.

8. Verfahren nach Anspruch 1, dadurch gekennzeichnet, daß Dampf von etwa 120° C mit einem Überdruck von etwa 1 bar in die Form (1) eingeleitet wird.

9. Verfahren nach Anspruch 1, dadurch gekennzeichnet, daß die Dauer der Stabilisierungsphase etwa 5 sec bis 10 sec beträgt.

10. Verfahren nach Anspruch 1, dadurch gekennzeichnet, daß der Unterdruck und der Dampf jeweils über mehrere Öffnungen (8, 10, 11) dem Formhohlraum (5) unmittelbar zugeführt werden.

11. Zwei- oder mehrteilige Form zur Herstellung von Formkörpern nach dem Verfahren gemäß einem der Ansprüche 1 bis 10, wobei jedes Formwerkzeugteil wenigstens eine Öffung zum Anlegen von unterdruck und/oder zum Zuführen von Dampf aufweist und zur Herstellung der Formwerkzeugteile schlecht wärmeleitfähiges Material verwendet wird, dadurch gekennzeichnet, daß die gesamte, dem Formhohlraum (5) zugewandte Oberfläche (19, 20, 22) der Form (1) zumindest eine innere Formwandschicht (21) aus schlecht wärmeleitfähigem Material und jedes Formwerkzeugteil (2, 3) jeweils wenigstens eine Öffnung (8, 10, 11) zum unmittelbaren Anschluß von Unterdruck und/oder Dampf aufweist.

12. Form nach Anspruch 11, dadurch gekennzeichnet, daß wenigstens eines der Formwerkzeugteile (2, 3) eine oder mehrere Einfüllöffnungen (7) aufweist, in die jeweils ein Füllinjektor (6) mündet.

13. Form nach Anspruch 11 oder 12, dadurch gekennzeichnet, daß wenigstens eines der Formwerkzeugteile (2, 3) wenigstens einen Auswerfstößel (23) mit in den Formhohlraum (5) ragender Oberfläche (22) aufweist.

14. Form nach einem der Ansprüche 11 bis 13, dadurch gekennzeichnet, daß die Form (1) eine oder mehrere Unterdrucköffnung(en) (11) zum Evakuieren der Trennstellen (12) zwischen den zwei oder mehr Formwerkzeugteilen (2, 3) aufweist.

15. Form nach Anspruch 11, dadurch gekennzeichnet, daß die Formwerkzeugteile (2, 3, 23) aus Metall und die schlecht wärmeleitfähigen Formwandschichten (21) aus Kunststoff, aus einer Glasur oder aus Email bestehen.

16. Form nach Anspruch 15, dadurch gekennzeichnet, daß ein Kunststoff aus oder auf der Basis von Polytetrafluorethylen (PTFE), Polyesterimid oder Polyimid verwendet ist.

17. Form nach Anspruch 15, dadurch gekennzeichnet, daß die Dicke der Formwandschicht (21) etwa 0,5 mm bis 3 mm beträgt.

18. Form nach Anspruch 11, dadurch gekennzeichnet, daß die Formwerkzeugteile (2, 3) aus einem mit gut wärmeleitfähigen Partikeln und/oder Fasern versetzten Kunststoff bestehen.

19. Form nach Anspruch 11, dadurch gekennzeichnet, daß auf der Oberfläche der den Formhohlraum (5) bildenden Wände Nuten mit einer Breite von etwa 0,1 mm bis 0,3 mm und einer Tiefe von etwa 0,5 mm bis 1,0 mm vorgesehen sind, die in wenigstens eine der Öffnungen (8, 10) münden.

20. Form nach einem der Ansprüche 11 bis 19, dadurch gekennzeichnet, daß die Formwerkzeugteile (2, 3, 23) bzw. die innere Formwandschicht (21) eine Wärmeleitfähigkeit von höchstens etwa 0,25 W/mK aufweisen bzw. aufweist.

## Claims

1. Method of manufacturing a moulded article from foamed plastics by heating a granulate, expanded by the introduction of heat, in a two- or multi-part mould, wherein the mould is evacuated by the application of a partial vacuum after it has been closed, then the granulate is introduced into the mould by means of a filling injector, then steam of such a temperature and humidity is introduced into the previously evacuated mould that the granulate is heated to such a high temperature by the energy released as a result of the condensation of the steam that the mould is filled with foam and the particles sinter together to form a homogeneous moulded article, and that then the condensed water or the steam is removed from the mould and the moulded article by a partial vacuum and, as this happens, the moulded article is cooled to demoulding temperature and then ejected from the mould, characterised in that a mould (1) is used of which the walls, optionally mould wall layers (21), forming the mould cavity (5) are constructed to be gas-tight and of which the surfaces facing the mould cavity (5) comprise poorly heat-conductive material;
in that the partial vacuum applied to the mould (1) when the latter has been closed is applied
a) to the mould cavity (5) and
b) outside the area of the mould cavity (5) for the evacuation of the separation sites (12) between the mould tool parts (2, 3) and
c) the partial vacuum is not switched off until the beginning of the steaming phase or until later in the steaming phase.

2. Method according to Claim 1, characterised in that the vapour valve (V 1.02) is opened when the partial vacuum valve (V 4.01) is still open or when the partial vacuum valves (V 4.01 and V 4.02) are still open.

3. Method according to Claim 1 or 2, characterised in that a short time after the beginning of the steaming operation the partial vacuum valve (V 4.01 or V 4.02) adjacent to the corresponding vapour valve (V 1.01 or V 1.02) is closed.

4. Method according to any one of Claims 1 to 3, characterised in that the application of the partial vacuum and the introduction of the vapour take place directly on or into the mould (1) or into the mould cavity (5).

5. Method according to any one of Claims 1 to 4, characterised in that the partial vacuum and the vapour are applied or Introduced via the same openings (8, 10, 11) in the mould (1).

6. Method according to Claim 1, characterised in that the partial vacuum is so selected that the air in the mould cavity (5) is reduced to at least approximately from 5% to 10%, that is to say, to approximately from 0.05 to 0.1 bar.

7. Method according to Claim 1, characterised in that the heat conductivity of the walls of the mould (1) or of the walls or mould wall layers (21), forming the mould cavity (5), of the mould tool parts (2, 3, 23) is so selected and/or the outer surface of the same is so constructed that the external temperature of the mould (1) assumes a value no higher than approximately from 50° to 70°C, especially no higher than approximately from 55° to 60°C.

8. Method according to Claim 1, characterised in that vapour of approximately 120°C is introduced into the mould (1) under an excess pressure of approximately 1 bar.

9. Method according to Claim 1, characterised in that the duration of the stabilisation phase is approximately from 5 sec to 10 sec.

10. Method according to Claim 1, characterised in that the partial vacuum and the vapour are each conveyed directly to the mould cavity (5) via several openings (8, 10, 11).

11. Two- or multi-part mould for the manufacture of moulded articles according to the method of any one of claims 1 to 10, wherein each mould tool part has at least one opening for the application of a partial vacuum and/or for the introduction of vapour, and poorly heat-conductive material is used for the manufacture of the mould tool parts, characterised in that the entire surface (19, 20, 22) of the mould (1) facing the mould cavity (5) has at least one inner mould wall layer (21) of poorly heat-conductive material and each mould tool part (2, 3) has at least one opening (8, 10, 11) for the direct supply of partial vacuum and/or vapour.

12. Mould according to Claim 11, characterised in that at least one of the mould tool parts (2, 3) has one or more filling openings (7) in each of which a filling injector (6) opens out.

13. Mould according to Claim 11 or 12, characterised in that at least one of the mould tool parts (2, 3) has at least one ejection pin (23) having a surface (22) projecting into the mould cavity (5).

14. Mould according to any one of Claims 11 to 13, characterised in that the mould (1) has one or more partial vacuum opening(s) (11) for the evacuation of the separation sites (12) between the two or more mould tool parts (2, 3).

15. Mould according to Claim 11, characterised in that the mould tool parts (2, 3, 23) are produced from metal and the poorly heat-conductive mould wall layers (21) are produced from plastics, from a glaze or from enamel.

16. Mould according to Claim 15, characterised in that a plastics material produced from or on the basis of polytetrafluoroethylene (PTFE), polyester imide or polyimide is used.

17. Mould according to Claim 15, characterised in that the thickness of the mould wall layer (21) is approximately from 0.5 mm to 3 mm.

18. Mould according to Claim 11, characterised in that the mould tool parts (2, 3) are produced from a plastics material to which particles and/or fibres exhibiting good heat conductivity have been added.

19. Mould according to Claim 11, characterised in that there are provided on the surface of the walls forming the mould cavity (5) grooves that have a width of approximately from 0.1 mm to 0.3 mm and a depth of approximately from 0.5 mm to 1.0 mm and that open out in at least one of the openings (8, 10).

20. Mould according to any one of Claims 11 to 19, characterised in that the mould tool parts (2, 3, 23) or the inner mould wall layer (21) exhibit(s) a heat conductivity of at most approximately 0.25 W/mK.

## Revendications

1. Procédé de fabrication d'une pièce moulée en matière plastique expansée par chauffage d'un granulé expansé par apport de chaleur dans un moule en deux ou plusieurs parties, où on met le moule sous vide après la fermeture par sa mise en dépression, ensuite on injecte le granulé par un injecteur de remplissage dans le moule, puis on introduit de la vapeur d'eau à une température et humidité telle dans le moule mis sous vide au préalable que le granulé est chauffé par l'énergie de condensation de la vapeur d'eau de sorte que la mise en forme est expansée et que les particules sont frittées en une pièce moulée homogène, et qu'ensuite on élimine l'eau condensée ou la vapeur d'eau par mise sous vide du moule et qu'ainsi on refroidit la pièce moulée à la température de démoulage et qu'ensuite on démoule, caractérisé en ce qu'on utilise un moule (1) dont les parois formant la chambre creuse de moulage (5), le cas échéant les couches de paroi de moule (21), sont hermétiques au gaz et leurs surfaces tournées vers la chambre creuse de moulage (5) sont en matériau mauvais conducteur de la chaleur ;
que, après la fermeture du moule (1) une dépression y est appliquée,
a) à la chambre creuse de moulage (5) et
b) en dehors du domaine de la chambre creuse de moulage (5) pour mettre sous vide les zones de séparation (12) entre les parties du moule (2, 3) et
c) on interrompt la dépression au début de la phase de vaporisation ou seulement plus tard pendant la phase de vaporisation.

2. Procédé selon la revendication 1, caractérisé en ce qu'on ouvre la vanne de vapeur (V 1.02) quand la vanne de dépression est encore ouverte (V 4.01) ou quand les vannes de dépression (V 4.01 et V 4.02) sont encore ouvertes.

3. Procédé selon la revendication 1 ou 2, caractérisé en ce que peu de temps après le début de la vaporisation, on ferme la vanne de dépression (V 4.01 ou V 4.02) voisine de la vanne de vapeur (V 1.01 ou V 1.02) correspondante.

4. Procédé selon l'une des revendications 1 à 3, caractérisé en ce que l'application de la dépression et l'introduction de la vapeur dans le moule (1) ou dans la chambre creuse de moule (5) se succèdent immédiatement.

5. Procédé selon l'une des revendications 1 à 4, caractérisé en ce qu'on soumet ou applique au moule (1) la dépression et la vapeur par les mêmes orifices (8, 10, 11).

6. Procédé selon la revendication 1, caractérisé en ce qu'on choisit la dépression de sorte que la pression d'air dans la chambre creuse de moule (5) est réduite à au moins environ 5 % à 10 %, donc à environ 0,05 à 0,1 bar.

7. Procédé selon la revendication 1, caractérisé en ce qu'on choisit la conductibilité thermique des parois du moule (1) ou des parois formant la chambre creuse du moule (5) ou les couches de paroi du moule (21) des parties de moule (2, 3, 23) de telle sorte, et/ou on constitue leur surface externe, de sorte que la température externe du moule (1) n'a pas de valeur supérieure à environ 50°-70°C, notamment pas de valeur supérieure à environ 55°-60°C.

8. Procédé selon la revendication 1, caractérisé en ce qu'on introduit dans le moule de la vapeur à environ 120°C avec une surpression d'environ 1 bar dans le moule (1).

9. Procédé selon la revendication 1, caractérisé en ce que la durée de la phase de stabilisation est d'environ 5 sec. à 10 sec.

10. Procédé selon la revendication 1, caractérisé en ce qu'on applique la dépression et la vapeur chaque fois par plusieurs orifices (8, 10, 11) débouchant directement dans la chambre creuse de moule (5).

11. Moule en deux ou plusieurs parties de fabrication de pièces moulées selon le procédé, selon l'une des revendications 1 à 10, où chaque partie de moule présente au moins un orifice pour appliquer la dépression et/ou pour conduire la vapeur et qu'on utilise un matériau mauvais conducteur de la chaleur pour réaliser les parties de moule, caractérisé en ce que toute la surface (19, 20, 22) tournée vers la chambre creuse de moule (5) du moule (1) présente au moins une couche de paroi de moule interne (21) en matériau mauvais conducteur de la chaleur et chaque pièce de moule (2, 3) présente chaque fois au moins un orifice (8, 10, 11) pour brancher directement la dépression et/ou la vapeur.

12. Moule selon la revendication 11, caractérisé en ce que l'une des parties de moule (2, 3) présente un ou plusieurs orifices de remplissage (7) où débouche chaque fois un injecteur de remplissage (6).

13. Moule selon la revendication 11 ou 12, caractérisé en ce qu'au moins l'une des parties de moule (2, 3) présente au moins un éjecteur (23) avec une surface en saillie (22) dans la chambre creuse du moule (5).

14. Moule selon l'une des revendications 11 à 13, caractérisé en ce que le moule (1) présente un ou plusieurs orifices (11) pour mettre sous vide les zones de séparation (12) entre les deux parties de moule (2, 3) ou plus.

15. Moule selon la revendication 11, caractérisé en ce que les parties de moule (2, 3, 23) sont en métal et que les couches de paroi de moule (21) mauvaises conductrices de la chaleur sont en matière plastique, en glaçure ou en émail.

16. Moule selon la revendication 15, caractérisé en ce qu'on utilise une matière plastique en ou à base de polytétrafluoréthylène (PTFE), polyesterimide ou polyimide.

17. Moule selon la revendication 15, caractérisé en ce que l'épaisseur de la couche de paroi de moule (21) est d'environ 0,5 mm à 3 mm.

18. Moule selon la revendication 11, caractérisé en ce que les parties de moule (2, 3) sont en particules bonnes conductrices de la chaleur et/ou en matière plastique renforcée de fibres.

19. Moule selon la revendication 11, caractérisé en ce qu'on prévoit à la surface des parois formant la chambre creuse de moule (5), des rainures d'une largeur environ de 0,1 mm à 0,3 mm et d'une profondeur environ de 0,5 mm à 1,0 mm, qui débouchent dans au moins l'une des ouvertures (8, 10).

20. Moule selon l'une des revendications 11 à 19, caractérisé en ce que les parties de moule (2, 3, 23) ou la couche interne de paroi de moule (21) a ou ont une conductibilité thermique d'au plus de 0,25 W/mK environ.
